# EUROPEAN PATENT SPECIFICATION

(11) **EP 4 568 170 B1**
(45) Date of publication and mention of the grant of the patent: **23.09.2026**
(21) Application number: 23214171.3
(22) Date of filing: 05.12.2023
(51) Int. Cl.: H04L 9/08

(54) **QUANTUM KEY DISTRIBUTION SYSTEM AND METHOD WITH REDUCED ENTROPY REQUIREMENTS**
QUANTENSCHLÜSSELVERTEILUNGSSYSTEM UND VERFAHREN MIT REDUZIERTEN ENTROPIEANFORDERUNGEN
SYSTÈME ET PROCÉDÉ DE DISTRIBUTION DE CLÉ QUANTIQUE AVEC EXIGENCES D'ENTROPIE RÉDUITES

(43) Date of publication of application: 11.06.2025
(73) Proprietor: ID Quantique S.A., 1227 Genève (CH)
(72) Inventor: HUTTNER, Bruno, 1022 Chavannes-près-Renens (CH)
(74) Representative: KATZAROV S.A.

(56) References cited:
- WO-A1-2022/243657
- US-A1- 2005 201 563
- HERRERO-COLLANTES MIGUEL ET AL: "Quantum random number generators", REVIEWS OF MODERN PHYSICS, vol. 89, no. 1, 21 October 2016 (2016-10-21), XP055822716, ISSN: 0034-6861, Retrieved from the Internet <URL:https://arxiv.org/pdf/1604.03304.pdf> DOI: 10.1103/RevModPhys.89.015004
- MATAJ PIVOLUSKA ET AL: "Device Independent Random Number Generation", ARXIV.ORG, CORNELL UNIVERSITY LIBRARY, 201 OLIN LIBRARY CORNELL UNIVERSITY ITHACA, NY 14853, 23 February 2015 (2015-02-23), XP081331331, DOI: 10.2478/ASPRT-2014-0006

## Description

### Technical field

The present invention relates to a QKD system and a method, which requires a lower rate of entropy generation.

### Background of the invention

Quantum cryptography or quantum key distribution, in the following also referred to as QKD, is a method allowing the distribution of a secret key between two distant parties, the emitter, usually called Alice, and the receiver, usually called Bob, with a provable security. Quantum key distribution relies on quantum physics principles and encoding information in quantum states, or qubits, as opposed to classical communication's use of bits. Usually, pulses of light containing single photons are used for these quantum states. Quantum key distribution exploits certain properties of these quantum states to ensure its security.

More particularly, the security of this method comes from the fact that the measurement of the state of an unknown quantum system modifies the system itself. In other words, a spy eavesdropping on a quantum communication channel cannot get information on the bits exchanged between the emitter and the receiver without introducing errors. These errors will be discovered by the users during the reconciliation process, thereby informing them of an eavesdropping attempt.

QKD is generally combined with encryption devices, which enable secure transmission of useful payload by performing some kind of symmetric encryption using the keys exchanged by quantum key distribution. Specific quantum key distribution systems are described for instance in US 5,307,410.

One of the major limitations of QKD systems is the high requirement in terms of entropy compared to commercially available random number generators.

In QKD systems, the sender, Alice, needs to randomly choose several variables for each pulse before sending it to Bob. For example, in the BB84 protocol with decoy states, where the optical pulses are weak coherent states, which may have more than one photon, for each optical pulse sent to Bob, Alice has to choose:
(i) the basis,
(ii) the bit value, and
(iii) the intensity of the weak coherent pulse (normally one out of 3 possibilities).

This corresponds to at least four random bits for each pulse that Alice wishes to send to Bob. Consequently, for a pulse repetition rate of, say 1 GHz, a random number generator with a rate of at least 4 Gbit/s is needed.

On Bob's side, the problem is less acute, since, although Bob may have to actively choose the basis he will measure in, the bit value is the result of his measurement, and Bob does not select the intensity of each pulse. In addition, the choice of basis can also be passive, for example by means of a beam splitter. Hence, on Bob's side only the choice of the basis can be active and consume random bits.

The above demonstrates that the generation of random bits with sufficient repetition rate is a necessary feature in all QKD devices. All random number generators (also known as Random Bit Generators) require an entropy source. This entropy source, which is the origin of true randomness, is always a physical system. For classical systems, i.e., systems whose dynamics are obtained from classical mechanics, the entropy generation relies on noise or on chaotic processes. However, since classical mechanics is deterministic, it is not easy to certify the entropy level of a classical source. Therefore, the best entropy sources come from quantum processes. Indeed, it is now well established that quantum mechanics is a non-deterministic theory, and that quantum measurements generate entropy. Quantum entropy sources generate streams of identical quantum systems and measure them to obtain a stream of random numbers.

Since entropy sources are physical systems, which cannot be perfect, they cannot generate perfect entropy, meaning that one bit in the stream contains one bit of entropy. However, through mathematical processing, it is possible to extract, from a longer but imperfect stream, a shorter stream with perfect entropy. This is called entropy distillation. More precisely, the final entropy can be chosen as close to perfect as required, at the expense of shortening the stream more. A fully entropic Quantum Random Number Generator (QRNG) is the combination of a quantum entropy source with the required mathematical processing, which generates streams of bits with one bit of entropy per bit.

In many instances, a fully entropic QRNG is not required. The entropy source can be used as a seed for so-called deterministic random bit generators (DRBG's). A DRBG uses the entropy source as an input, processes this input with mathematical algorithms, and generates random numbers with a much higher bit rates than the source. This is known as randomness expansion. Since the mathematical process is deterministic, the total entropy cannot increase through this process. The initial entropy is diluted over the expanded stream. The entropy per bit is therefore lower. The quality of the randomness should be tested, for example by following statistical tests described in the National Institute of Standards and Technology (NIST) publication: " A Statistical Test Suite for Random and Pseudorandom Number Generators for Cryptographic Applications", Rukhin et al., Special Publication 800-22 Revision 1a, April 2010.

It needs to be noted that in terms of security, in order to have good entropy, QKD systems rely on QRNGs to generate the necessary randomness. In fact, all recent security proofs of QKD require random numbers with full entropy. PRNG's or QRNG with randomness expansion, can provide high enough rates of random numbers, but these random numbers do not have full entropy. Therefore, QKD systems with high pulse repetition rate require fully entropic high speed QRNG's. Therefore, by taking the above-mentioned example of a pulse repetition rate of 1 GHz, a fully entropic QRNG with a rate of 4 Gbit/s is needed.

Unfortunately, today, such QRNGs, with random bit rate about 1 Gbit/s and higher are not easy to manufacture or procure.

The existing QRNGs with a bit rate of about 1 Gbits/s are bulky and therefore need to be positioned outside the QKD equipment, in a separate box. This adds space, cost and possibly security issues, since the random numbers must be secret.

Alternatively, another prior solution is to increase the random rate by combining several QRNGs, however as for the previous solution, this requires space and possibly security issues as it needs to be placed outside the QKD box, consequently lowering the security.

Alternatively, another solution for reducing the need of random numbers was suggested in patent US7606367B2 from ID Quantique. This patent relates to the BB84 protocol with single photons source. In this solution, Alice does not choose a random basis for each pulse that she wants to send to Bob, but groups the pulses into large blocks of, say n pulses, with the same basis. She randomly selects the basis for each block only. For large blocks, this lowers the number of random bits by almost a factor of two. With the standard protocol, a block of n bits requires 2n random bits per block, with the protocol of the invention US7606367B2, only n+1 random bits per block are needed. Unfortunately, this solution can only be used for the BB84 protocol performed with single photons, which is not practical today. All existing implementations of BB84 rely on weak coherent states, which are easy to generate, for example with an attenuated laser. However, in this case, there is a small probability that these pulses contain more than one photon. With weak coherent pulses, if even one pulse in the block has more than one photon, the eavesdropper could find the basis used in this block and therefore obtain the complete information on all the pulses in the block. Therefore, this idea cannot be used in practical cases today, where weak coherent pulses are normally used.,

In view of the above, there is a need to reduce the rate of entropy required by QKD systems while maintaining the same level of security.

An object of the present invention is therefore to provide a method and a system with a reduced entropy rate.

### Summary of the invention

The invention is based on the general approach that the choice of the basis and the choice of the bit value can have different requirements on the entropy rate.

The general idea of the invention is that the QKD emitter, Alice, needs to generate random numbers for different variables but the requirements on the entropy for each of these variables are different.

Advantageously, with this approach the need for entropy is reduced while maintaining the same level of security.

With the present invention, only a full entropy QRNG with at least the same random bit rate as the pulse rate is needed in order to have full entropy on the bit choice. However, a QRNG with randomness expansion can be used for the choice of basis and the choice of the intensity of the weak coherent pulses. This lowers the total entropy rate of the QRNG by almost a factor of four.

A first aspect of the invention relates a Quantum Key Distribution System comprising an emitter and a receiver adapted to communicate, wherein the emitter comprises an optical pulse source adapted to generate an optical pulse to be sent to the receiver, and at least one random bit generator adapted to set a bit value, a basis value and an intensity value of the optical pulse, wherein the at least one random bit generator comprises a bit value source adapted to generate full entropy to set the bit value of the optical pulse, a basis value source and an intensity value source, characterized in that the basis value source and the intensity value source are adapted to process entropy with expanded randomness to set the basis and the intensity of the optical pulse.

Preferably, the basis value source and the intensity value source are adapted to generate the basis and intensity values which are independently distributed.

Advantageously, the random bit generator is a single component adapted to function as the bit, basis value and intensity value sources.

In a preferred manner, the random bit generator is composed of two components, one adapted to function as the bit value source and the second adapted to function as the basis and intensity value sources.

Preferably, the random bit generator is composed of three components one adapted to function as the bit value source, the second adapted to function as the basis value source and the third adapted to function as the intensity value source.

Advantageously, the bit value source is a QRNG with a high bit rate.

In a preferred manner, the QRNG is a fully entropic QRNG presenting a random bit rate at least equal to the pulse rate of the optical pulse source.

Preferably, the basis value source and the intensity value source are a QRNG with a low entropy rate. The QRNG needs to provide random numbers with the same rate as three times the pulse rate, in our example. The entropy rate can be much smaller and is followed by randomness expansion.

Advantageously, the QRNG with a low entropy rate is a QRNG with randomness expansion presenting a final random bit rate equal the pulse rate of the pulse source.

In a preferred manner, the basis value source and the intensity value source are a deterministic random bit generator using entropy source as an input, processes this input with mathematical algorithms.

Preferably, the entropy source is the fully entropic QRNG of the bit value generator.

Advantageously, the entropy source is a QRNG different than the one of the bit value source.

A second aspect of the invention relates a Quantum Key Distribution method comprising the steps of generating an optical pulse at an emitter, setting a bit value, a basis value and an intensity value of the optical pulse with at least one random bit generator, wherein the bit value of the optical pulse is generated with full entropy, and the basis and intensity values of the optical pulse are generated with expanded randomness, encoding the values and sending the optical pulse to a receiver.

### Brief description of the drawings

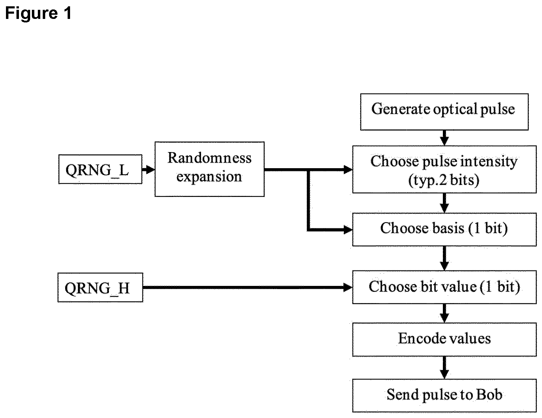

The invention will be described with reference to the drawings, in which the same reference numerals indicate the same feature. In particular, Figure 1 is a block diagram representing the step-by-step method of the present invention.

### Detailed Description

The invention will be described, for better understanding, with reference to specific embodiments. It will however be understood that the invention is not limited to the embodiments herein described but is rather defined by the claims and encompasses all embodiments which are within the scope of the claims.

The invention description is based on figure 1.

For simplicity, we will use the BB84 protocol with decoy states as an example. The invention would apply similarly to other protocols.

The invention relies on the fact that Alice needs to generate random numbers for three different variables and that the requirements on the entropy for each of these variables are different.

The variables to be determined by Alice are the following:
1. Choice of the bit value (0 or 1), which will be sent to Bob.
2. Choice of the basis which will be used (referred to as X and Z basis).
3. Choice of the intensity of the weak coherent pulses, typically one out of three values (µ₀; µ₁; µ₂).

The requirements for each of these variables are summarized in Table 1 below.

**Table 1: Requirements for different variables**

| Variable | Requirement | Generator | Rate |
|---|---|---|---|
| Bit value (0 or 1) | Full entropy 1 bit per bit | Fully entropic QRNG | [pulse rate] |
| Basis (X or Z) | Unpredictable distribution | QRNG + Expansion | [pulse rate]/ [coefficient of expansion] |
| Pulse intensity (µ₀; µ₁; µ₂) | Unpredictable distribution | QRNG + Expansion | [pulse rate]/ [coefficient of expansion] |

The choice of the bit value requires full entropy, meaning that a fully entropic random bit generator, preferably a QRNG, is required. Such a requirement is explained with reference to protocol BBM92. The BB84 protocol is equivalent to the BBM92 protocol with entangled photons (Bennett, Charles H.; Brassard, Gilles; Mermin, N. David (1992-02-03).

The security of the BBM92 protocol is easier to analyze and has been used to obtain security proofs. In BBM92, Alice prepares entangled photon pairs, keeps one of them and sends the second to Bob. Alice later chooses to measure her photon in one of the two bases, say X and Z. The result of her measurement is the bit value. This means that the bit value has full entropy (from first principles of quantum mechanics). The states sent to Bob are then exactly the BB84 states, assuming that the choice of bit value in BB84 also has full entropy.

In order to apply the security proofs of QKD, the distribution of the bit choice has to be identical to the distribution obtained by a quantum measurement. This can be achieved by a random bit generator, preferably a QRNG, with full entropy. Therefore, in the choice of the bit value, random numbers provided by full entropic random bit generator such as a QRNG must be used, and such requirement cannot be lowered. In addition, the requirement of full entropy for the bit choice is also necessary in order to have full entropy on the final secret key, obtained after the processing.

Instead, the choice of basis is different: in this case both Alice and Bob must choose their bases independently and in a way that is initially unknown to a potential eavesdropper Eve. However, in most protocols, there is a bias: one measurement basis, which will be used for the key establishment is chosen with higher probability than the second one, which will be used for testing eavesdropping attempts. In addition, right after the exchange, the bases will be publicly disclosed and all the cases where Alice and Bob did not use the same basis will be discarded. As noted in US7606367B2, the distribution of the bases chosen by Alice (or by Bob) does not matter, as long as Eve does not know it during the exchange.

The only requirement for randomness is therefore the unpredictability of the choice. This can be achieved if the distribution is independent: the choice of the basis for pulse n+1 should not depend on the choice for previous n pulses. As a result, the source of randomness does not have to be with full entropy, hence a low-rate random bit generator, such as a low rate QRNG, combined with randomness expansion with mathematical processing can be used consequently lowering the requirement for the bits rate of the QRNG.

For the pulse intensity distribution similar considerations apply. In this case, Alice randomly chooses one of three (or more) possible values. The distribution is strongly biased, most pulses have intensity, say µ₀, and only a few having µ₁ or µ₂. This choice must be unknown to Eve at the time of the exchange, to prevent her from adapting her strategy to the intensity. However, it will be later publicly disclosed by Alice, to allow Bob to use the result to perform statistical tests and check that Eve has not modified the expected distribution, with the so-called Photon-Number Splitting attack.

As for the basis, the only requirement on the random source is that it produces unpredictable results. This can be achieved with any well-tested RNG, preferably with a QRNG seed and randomness expansion.

For this reason, a preferred embodiment of the present invention relates to a Quantum Key Distribution System comprising an emitter and a receiver adapted to communicate, wherein the emitter comprises an optical pulse source and at least one random number generator.

The optical pulse source is adapted to generate an optical pulse to be sent to the receiver and the at least one random bit generator is adapted to set a bit, a basis and an intensity value of said optical pulse.

According to the above, the at least one random bit generator comprises a bit value source adapted to generate full entropy to set said bit value of said optical pulse.

It also comprises a basis value source and an intensity value source adapted to generate and/or process entropy with expanded randomness to set said basis and said intensity of said optical pulse. In consequence, the basis and intensity values are independently distributed.

The physical implementation of the random bit generator may have various forms. It can be a single component adapted to function as said bit, basis value and intensity value sources, alternatively, it can be composed of two components one adapted to function as said bit value source and the second adapted to function as said basis and intensity value sources. Ultimately, it can be composed of three components one adapted to function as said bit value source, the second adapted to function as said basis value source and the third adapted to function as said intensity value source.

In this embodiment, the bit value source is a QRNG with a high bit rate, preferably a fully entropic QRNG presenting a random bit rate at least equal said pulse rate of said optical pulse source, whereas the basis value source and the intensity value source are composed of one or two QRNG with low bit rate, preferably one or two QRNG with randomness expansion presenting a random bit rate equal said pulse rate of said pulse source divided by coefficient of expansion, even more preferably deterministic random bit generator using entropy source, preferably the fully entropic QRNG, as an input and processing this input with mathematical algorithms.

The invention also relates to a Quantum Key Distribution method comprising the steps of generating an optical pulse at an emitter, setting a bit value, a basis value and an intensity value of said optical pulse with at least one random bit generator, wherein said bit value of said optical pulse is generated with full entropy, and said basis and intensity values of said optical pulse are generated with expanded randomness.

While the embodiments have been described in conjunction with a number of alternatives, it is evident that many other alternatives, modifications and variations would be or are apparent to those of ordinary skill in the applicable arts. Accordingly, this disclosure is intended to embrace all such alternatives, modifications, equivalents and variations that are within the scope of this disclosure.

## Claims

1. Quantum Key Distribution System comprising an emitter and a receiver adapted to communicate, wherein the emitter comprises:
an optical pulse source adapted to generate an optical pulse to be sent to the receiver, and
at least one random bit generator adapted to set a bit value, a basis value and an intensity value of said optical pulse,
wherein said at least one random bit generator comprises a bit value source adapted to generate full entropy to set said bit value of said optical pulse, a basis value source and an intensity value source,
**characterized in that** said basis value source and said intensity value source are adapted to process entropy with expanded randomness to set said basis and said intensity of said optical pulse.

2. Quantum Key Distribution System according to claim 1, **characterized in that** said basis value source and said intensity value source are adapted to generate said basis and intensity values which are independently distributed.

3. Quantum Key Distribution System according to claim 1 or 2, **characterized in that** said random bit generator is a single component adapted to function as said bit, basis value and intensity value sources.

4. Quantum Key Distribution System according to claim 1 or 2, **characterized in that** said random bit generator is composed of two components one adapted to function as said bit value source and the second adapted to function as said basis and intensity value sources.

5. Quantum Key Distribution System according to claim 1 or 2, **characterized in that** said random bit generator is composed of three components one adapted to function as said bit value source, the second adapted to function as said basis value source and the third adapted to function as said intensity value source.

6. Quantum Key Distribution System according to any one of claims 1 to 5, **characterized in that** said bit value source is a QRNG with a high entropy rate.

7. Quantum Key Distribution System according to claim 6, **characterized in that** said QRNG is a fully entropic QRNG presenting a random bit rate at least equal said pulse rate of said optical pulse source.

8. Quantum Key Distribution System according to any one of claims 1 to 7, **characterized in that** said basis value source and said intensity value source are a QRNG with a low entropy rate.

9. Quantum Key Distribution System according to claim 8, **characterized in that** said QRNG with a low entropy rate is a QRNG with randomness expansion presenting a final random bit rate equal said pulse rate of said pulse source.

10. Quantum Key Distribution System according to any one of claims 7 to 9, **characterized in that** said basis value source and said intensity value source are a deterministic random bit generator using entropy source as an input, processes this input with mathematical algorithms.

11. Quantum Key Distribution System according to claim 10, **characterized in that** said entropy source is said fully entropic QRNG of said bit value generator.

12. Quantum Key Distribution System according to claim 11, **characterized in that** said entropy source is a QRNG different than the one of the bit value source.

13. Quantum Key Distribution method comprising the steps of
generating an optical pulse at an emitter,
setting a bit value, a basis value and an intensity value of said optical pulse with at least one random bit generator,
wherein said bit value of said optical pulse is generated with full entropy, and said basis and intensity values of said optical pulse are generated with expanded randomness,
encoding said values and
sending said optical pulse to a receiver.

## Patentansprüche

1. Quantenschlüsselverteilungssystem, umfassend einen Sender und einen Empfänger, die zum Kommunizieren ausgelegt sind, wobei der Sender Folgendes umfasst:
eine Quelle optischer Impulse, die dazu ausgelegt ist, einen optischen Impuls zu erzeugen, der an den Empfänger gesendet werden soll, und
mindestens einen Zufallsbitgenerator, der dazu ausgelegt ist, einen Bitwert, einen Basiswert und einen Intensitätswert des optischen Impulses festzulegen,
wobei der mindestens eine Zufallsbitgenerator eine Bitwertquelle, die dazu ausgelegt ist, volle Entropie zum Festlegen des Bitwerts des optischen Impulses zu erzeugen, eine Basiswertquelle und eine Intensitätswertquelle umfasst,
**dadurch gekennzeichnet, dass** die Basiswertquelle und die Intensitätswertquelle dazu ausgelegt sind, Entropie mit erweiterter Zufälligkeit zu verarbeiten, um die Basis und die Intensität des optischen Impulses festzulegen.

2. Quantenschlüsselverteilungssystem nach Anspruch 1, **dadurch gekennzeichnet, dass** die Basiswertquelle und die Intensitätswertquelle dazu ausgelegt sind, die Basis- und die Intensitätswerte zu erzeugen, die unabhängig verteilt werden.

3. Quantenschlüsselverteilungssystem nach Anspruch 1 oder 2, **dadurch gekennzeichnet, dass** der Zufallsbitgenerator eine einzige Komponente ist, die dazu ausgelegt ist, als die Bitwert-, die Basiswert- und die Intensitätswertquelle zu fungieren.

4. Quantenschlüsselverteilungssystem nach Anspruch 1 oder 2, **dadurch gekennzeichnet, dass** der Zufallsbitgenerator aus zwei Komponenten besteht, wobei eine dazu ausgelegt ist, als die Bitwertquelle zu fungieren, und die zweite dazu ausgelegt ist, als die Basiswert- und die Intensitätswertquelle zu fungieren.

5. Quantenschlüsselverteilungssystem nach Anspruch 1 oder 2, **dadurch gekennzeichnet, dass** der Zufallsbitgenerator aus drei Komponenten besteht, wobei eine dazu ausgelegt ist, als die Bitwertquelle zu fungieren, die zweite dazu ausgelegt ist, als die Basiswertquelle zu fungieren, und die dritte dazu ausgelegt ist, als die Intensitätswertquelle zu fungieren.

6. Quantenschlüsselverteilungssystem nach einem der Ansprüche 1 bis 5, **dadurch gekennzeichnet, dass** die Bitwertquelle ein QRNG mit hoher Entropierate ist.

7. Quantenschlüsselverteilungssystem nach Anspruch 6, **dadurch gekennzeichnet, dass** der QRNG ein vollentropischer QRNG ist, der eine Zufallsbitrate mindestens gleich der Impulsrate der Quelle optischer Impulse aufweist.

8. Quantenschlüsselverteilungssystem nach einem der Ansprüche 1 bis 7, **dadurch gekennzeichnet, dass** es sich bei der Basiswertquelle und der Intensitätswertquelle um einen QRNG mit niedriger Entropierate handelt.

9. Quantenschlüsselverteilungssystem nach Anspruch 8, **dadurch gekennzeichnet, dass** der QRNG mit niedriger Entropierate ein QRNG mit Zufälligkeitserweiterung ist, der eine endgültige Zufallsbitrate gleich der Impulsrate der Quelle optischer Impulse aufweist.

10. Quantenschlüsselverteilungssystem nach einem der Ansprüche 7 bis 9, **dadurch gekennzeichnet, dass** es sich bei der Basiswertquelle und der Intensitätswertquelle um einen deterministischen Zufallsbitgenerator handelt, der eine Entropiequelle als Eingabe verwendet und diese Eingabe mit mathematischen Algorithmen verarbeitet.

11. Quantenschlüsselverteilungssystem nach Anspruch 10, **dadurch gekennzeichnet, dass** die Entropiequelle der vollentropische QRNG des Bitwertgenerators ist.

12. Quantenschlüsselverteilungssystem nach Anspruch 11, **dadurch gekennzeichnet, dass** die Entropiequelle ein anderer QRNG als der eine der Bitwertquelle ist.

13. Quantenschlüsselverteilungsverfahren, umfassend die folgenden Schritte:
Erzeugen eines optischen Impulses an einem Sender,
Festlegen eines Bitwerts, eines Basiswerts und eines Intensitätswerts des optischen Impulses mit mindestens einem Zufallsbitgenerator,
wobei der Bitwert des optischen Impulses mit voller Entropie erzeugt wird und der Basis- und der Intensitätswert des optischen Impulses mit erweiterter Zufälligkeit erzeugt werden,
Codieren der Werte und
Senden des optischen Impulses an einen Empfänger.

## Revendications

1. Système de distribution de clés quantiques comprenant un émetteur et un récepteur adaptés pour communiquer, dans lequel l'émetteur comprend :
une source d'impulsions optiques adaptée pour générer une impulsion optique destinée à être envoyée au récepteur, et
au moins un générateur de bits aléatoires adapté pour définir une valeur de bit, une valeur de base et une valeur d'intensité de ladite impulsion optique,
dans lequel ledit au moins un générateur de bits aléatoires comprend une source de valeur de bit adaptée pour générer une entropie totale afin de définir ladite valeur de bit de ladite impulsion optique, une source de valeur de base et une source de valeur d'intensité,
**caractérisé en ce que** ladite source de valeur de base et ladite source de valeur d'intensité sont adaptées pour traiter l'entropie avec un caractère aléatoire étendu afin de définir ladite base et ladite intensité de ladite impulsion optique.

2. Système de distribution de clés quantiques selon la revendication 1, **caractérisé en ce que** ladite source de valeur de base et ladite source de valeur d'intensité sont adaptées pour générer lesdites valeurs de base et d'intensité de manière à ce qu'elles soient distribuées de façon indépendante.

3. Système de distribution de clés quantiques selon la revendication 1 ou 2, **caractérisé en ce que** ledit générateur de bits aléatoires est un composant unique adapté pour fonctionner en tant que lesdites sources de valeur de bit, de valeur de base et de valeur d'intensité.

4. Système de distribution de clés quantiques selon la revendication 1 ou 2, **caractérisé en ce que** ledit générateur de bits aléatoires est composé de deux composants, l'un étant adapté pour fonctionner en tant que ladite source de valeur de bit et le second étant adapté pour fonctionner en tant que lesdites sources de valeur de base et d'intensité.

5. Système de distribution de clés quantiques selon la revendication 1 ou 2, **caractérisé en ce que** ledit générateur de bits aléatoires est composé de trois composants, le premier étant adapté pour fonctionner en tant que ladite source de valeur de bit, le deuxième étant adapté pour fonctionner en tant que ladite source de valeur de base et le troisième étant adapté pour fonctionner en tant que ladite source de valeur d'intensité.

6. Système de distribution de clés quantiques selon l'une quelconque des revendications 1 à 5, **caractérisé en ce que** ladite source de valeur de bit est un QRNG (générateur de nombres aléatoires quantiques) doté d'un débit d'entropie élevé.

7. Système de distribution de clés quantiques selon la revendication 6, **caractérisé en ce que** ledit QRNG est un QRNG à entropie totale présentant un débit de bits aléatoires au moins égal à ladite cadence d'impulsion de ladite source d'impulsions optiques.

8. Système de distribution de clés quantiques selon l'une quelconque des revendications 1 à 7, **caractérisé en ce que** ladite source de valeur de base et ladite source de valeur d'intensité sont un QRNG doté d'un faible débit d'entropie.

9. Système de distribution de clés quantiques selon la revendication 8, **caractérisé en ce que** ledit QRNG doté d'un faible débit d'entropie est un QRNG avec expansion de caractère aléatoire présentant un débit de bits aléatoires final égal à ladite cadence d'impulsion de ladite source d'impulsions.

10. Système de distribution de clés quantiques selon l'une quelconque des revendications 7 à 9, **caractérisé en ce que** ladite source de valeur de base et ladite source de valeur d'intensité sont un générateur de bits aléatoires déterministe utilisant une source d'entropie comme entrée, et traitant cette entrée à l'aide d'algorithmes mathématiques.

11. Système de distribution de clés quantiques selon la revendication 10, **caractérisé en ce que** ladite source d'entropie est ledit QRNG à entropie totale dudit générateur de valeur de bit.

12. Système de distribution de clés quantiques selon la revendication 11, **caractérisé en ce que** ladite source d'entropie est un QRNG différent de celui de la source de valeur de bit.

13. Procédé de distribution de clés quantiques comprenant les étapes de :
génération d'une impulsion optique au niveau d'un émetteur,
définition d'une valeur de bit, d'une valeur de base et d'une valeur d'intensité de ladite impulsion optique avec au moins un générateur de bits aléatoires,
dans lequel ladite valeur de bit de ladite impulsion optique est générée avec une entropie totale, et lesdites valeurs de base et d'intensité de ladite impulsion optique sont générées avec un caractère aléatoire étendu,
codage desdites valeurs, et
envoi de ladite impulsion optique à un récepteur.
